# EUROPEAN PATENT SPECIFICATION

(11) **EP 3 690 299 B1**
(45) Date of publication and mention of the grant of the patent: **16.11.2022**
(21) Application number: 19155387.4
(22) Date of filing: 04.02.2019
(51) Int. Cl.: F16L 55/18, B29C 71/04, G21K 5/00, B29C 35/08

(54) **DEVICE FOR CURING COATING SUBSTANCE**
VORRICHTUNG ZUM HÄRTEN VON BESCHICHTUNGSMITTELN
DISPOSITIF DE DURCISSEMENT D'UNE SUBSTANCE DE REVÊTEMENT

(43) Date of publication of application: 05.08.2020
(73) Proprietor: Picote Solutions Inc., Sammamish, WA 98075 (US)
(72) Inventor: Lokkinen, Mika, 10130 Tallinn (EE)
(74) Representative: Wilenius, Jami Juhani

(56) References cited:
- EP-A1- 1 959 183
- EP-A1- 3 257 647
- EP-A1- 3 321 554
- WO-A1-2018/160974

## Description

### FIELD OF THE INVENTION

The present invention relates to devices for curing internal coating of a pipe, and especially illumination devices for curing internal coating of a pipe.

### BACKGROUND OF THE INVENTION

Pipe systems have for long been renovated by pumping coating substance to the pipe system being renovated and by levelling the coating substance to form a layer no more than 1 mm thick and with relative evenness on the inner surface of the pipe by means of rotating a brush. After the coating has cured, the treating has been repeated from two to four times to achieve an adequate coating thickness and to cover the possible impurities left in the pipe system entirely within the coating.

WO2018/160974 discloses a device for curing resin in a pipe liner. The device includes a heat sink and LEDs. The device is cooled by a flow of cooling fluid through the device.

A problem with the arrangement described in the above is the slow progress of the work, because a plurality of coating layers are needed and a previous layer needs to cure before the subsequent is spread. The number of coating layers needed depends on viscosity of the coating substance. Lower viscosity coating substance requires more layers than high viscosity coating substance.

### BRIEF DESCRIPTION OF THE INVENTION

An object of the present invention is to provide a device which decreases curing time of a coating substance and thereby alleviates or eliminates the problems of the prior art.

An aspect of the present invention is a device having a plurality of light emitting devices which are cooled with heat sinks and air flow. An air inlet channel is inside a duct and after flowing through the heat sink, air exits the device through an air outlet channel in which the air flows in a direction substantially parallel but opposite to air inlet channel.

The object of the invention is achieved with a device presented in independent claim. Advantageous embodiments are presented in dependent claims.

### BRIEF DESCRIPTION OF THE DRAWINGS

In the following the present invention is described in greater detail by means of preferred embodiments with reference to the accompanying drawings, in which
Figure 1 is a cross-section in length direction of a device according to an embodiment,
Figure 2 is a cross-section in width direction of a device according to an embodiment,
Figure 3 illustrates a device without a dome according to an embodiment,
Figure 4 illustrates a device according to an embodiment,
Figure 5 illustrates a device without a dome according to an embodiment, and
Figure 6 illustrates insides of a device according to an embodiment.

### DETAILED DESCRIPTION OF THE INVENTION

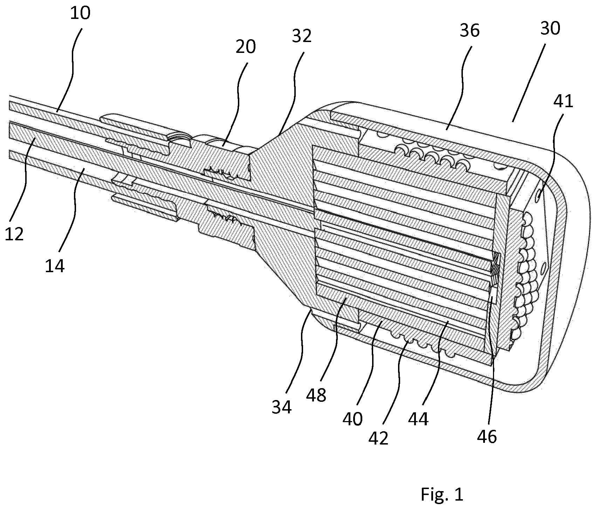

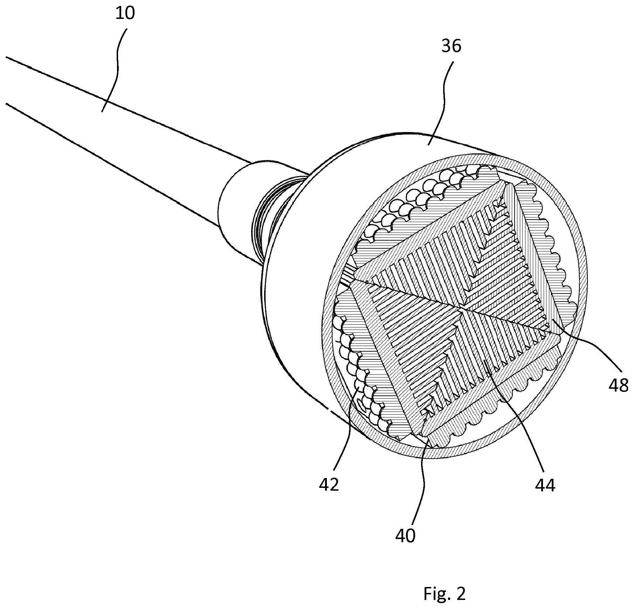

Figure 1 shows a length-wise cross-section and Figure 2 shows a width-wise cross-section of a device 30 according to an embodiment of the invention. The device 30 is designed for curing a coating substance inside a pipe, i.e. on the inner wall of the pipe. The device comprises a flexible shaft 12 disposed at least partially inside a duct 10. The internal diameter of the duct 10 is larger than the external diameter of the flexible shaft 12 so that an air inlet channel 14 is formed between the flexible shaft 12 and the duct 10. The flexible shaft 12 is preferably a flexible wound steel cable. The combination of the flexible shaft and the duct is flexible but preferably stiff enough to push, pull and turn the device.

The device has a body 32 configured to be attached to the duct 10, either directly or with a connector 20. For example connectors used with compressors and hoses for compressed air can be used. The flexible shaft 12 preferably extends further than the duct and the flexible shaft can preferably be attached to the body 32, for example with screws or friction screws.

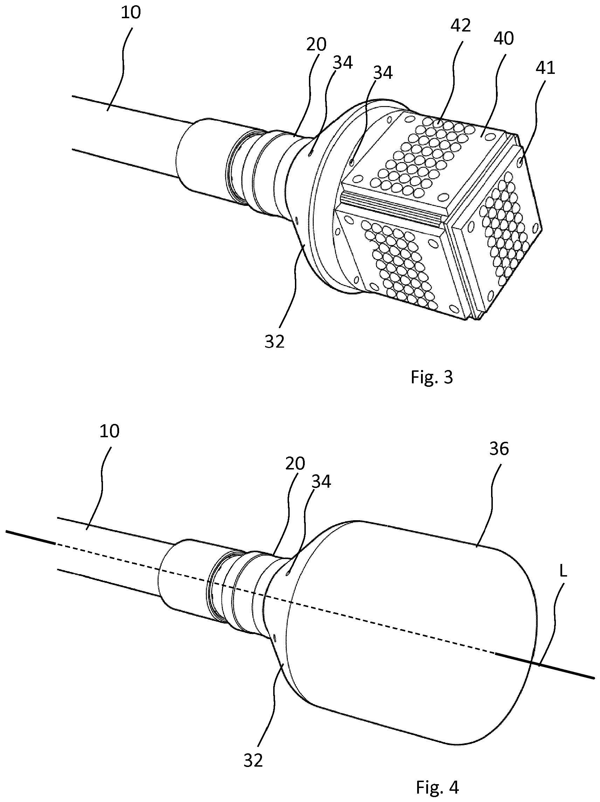

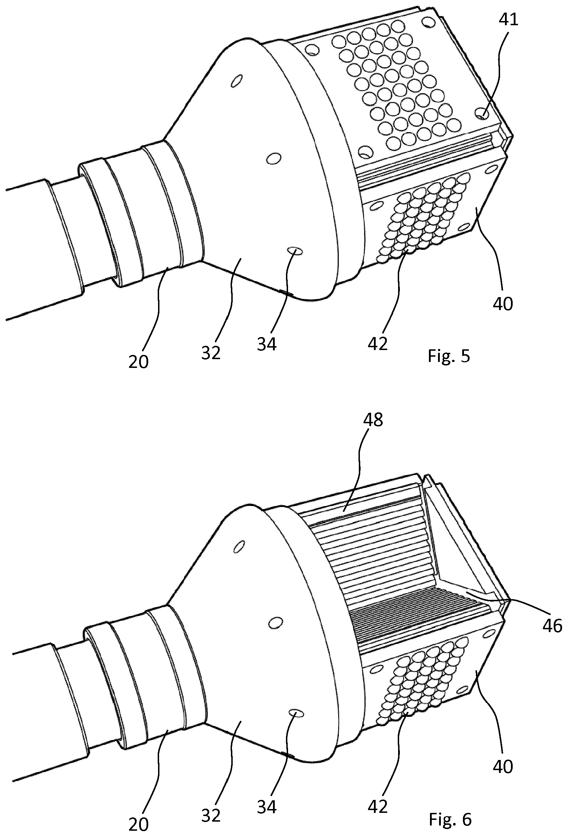

The device has one or more heat sinks 48 in connection with the body 32, attached to the body or as a part of the body. The one or more heat sinks define a plurality of cooling channels 44 which are in fluid connection with the air inlet channel 14. Fluid connection means that air and other fluids can flow between two points that are in fluid connection with each other. In this case, there can an aperture in the body 32 which connects the inside of the duct 10 to the cooling channels 44 of the heat sink 48 as shown in Figure 1. In an embodiment, the air inlet channel enters only a portion of the cooling channels of the one or more heat sinks. On an end of the one or more heat sinks, opposite to the air inlet channel can be a dividing channel 46 which connects all the cooling channels 44 of the one or more heat sinks. This structure forces the air to pass the one or more heat sinks at least twice thereby improving the cooling effect of the flowing air. In an embodiment the cooling channels 44 of the heat sink 48 extend in a length direction shown as 'L' in Figure 4 and the same direction applies to all embodiments. In that embodiment, the dividing channel 46 which connects all the cooling channels 44 of the one or more heat sinks extends in width direction, perpendicular to the length direction L. The dividing channel 46 can be seen in Figure 1 and Figure 6.

The device further comprises a plurality of light emitting devices 42 which are configured to be cooled by the one or more heat sinks 48, i.e. heat formed in the light emitting devices 42 is conducted to the one or more heat sinks. Electric power to the light emitting devices 42 is supplied with wires, for example with wires running inside the duct 10, outside the duct 10 or within the duct 10. The light emitting devices 42 can be in a form of arrays where multiple light emitting devices 42 are attached to a base plate 40 which is then attached to one or more heat sinks 48.

In an embodiment, the light emitting devices 42 are ultra-violet light emitting devices. Ultra-violet light is the most common electromagnetic radiation used for curing coating substances at the moment. As new coating substances are being developed, some other colours or wavelengths could also be used. In an embodiment, the light emitting devices 42 are ultra-violet light emitting diodes, i.e. UV LEDs. The LED itself can emit UV light or the LED can emit some other wavelength which is converted to UV light by means of coating or quantum dot technology.

In an embodiment, the device 30 comprises light emitting devices 42 facing at least four different directions which are perpendicular to the length direction L of the device. Preferably, the device 30 also comprises light emitting devices 42 facing to a direction parallel to the length direction L of the device, and most preferably facing to a direction away from the duct 10.

The device also comprises an air outlet channel 34 in fluid connection with the cooling channels 44 of the one or more heat sinks 48. The air outlet channel 34 exits the body 32 from the same side of the body 32 as the air inlet channel 14 enters the body 32. This means that the air flows in the air inlet channel 14 and in the air outlet channel 34 are parallel but the directions of flows are opposite. It is important that the air flow does not exit from an end opposite to the end where it enters the body 32. Because the light emitted by the light emitting devices 42 expedites curing of a coating substance, the output air flow must be directed so that it doesn't disturb any uncured coating surfaces. A strong air flow would cause wave patterns and other unwanted transformations to the uncured coating surfaces. The device 30 is intended to be pushed forward in a recently coated pipe using the flexible shaft 12 and the duct 10. Therefore, it is safe to direct the output air flow in the direction of the duct 10 as that side of the body 32 has already been cured.

Figure 3 and Figure 5 illustrates a device 30 according to an embodiment from two different angles. Figure 4 illustrates the same device with a dome 36 housing the light emitting devices 42 inside the dome. The dome 36 is transparent, at least to some wavelengths of the light emitted by the light emitting devices 42. The dome 36 preferably defines an air space between the inner wall of the dome 36 and the light emitting devices 42. The air space is in fluid connection with the cooling channels 44 of the heat sink 48 and the air outlet channel 34. Thereby the light emitting devices are cooled from the back side with the one or more heat sinks 48 and from the front side with air flow. The fluid connection can be arranged for example by apertures 41 in the base plates 40.

According to the invention the air outlet channel 34 is a through-hole in the body 32 and parallel to the air inlet channel 14 or the length direction L of the device. Air is configured to flow in the air inlet channel 14 to an opposite direction to air flowing in the air outlet channel 34. The present invention and its embodiments are not limited to the examples described above but may vary within the scope of the claims.

## Claims

1. A device (30) for curing a coating substance inside a pipe, the device comprising
a flexible shaft (12) disposed at least partially inside a duct (10), an air inlet channel (14) between the flexible shaft (12) and the duct (10),
a body (32) attached to the duct (10), a heat sink (48) in connection with the body (32) and defining a plurality of cooling channels (44) which are in fluid connection with the air inlet channel (14), and
a plurality of light emitting devices (42) configured to be cooled by the heat sink (48),
wherein the device further comprises an air outlet channel (34) in fluid connection with the cooling channels (44) of the heat sink (48), and the air outlet channel (34) exits the body (32) from the same side of the body (32) as the air inlet channel (14) enters the body (32), wherein the air outlet channel (34) is a through-hole in the body (32), **characterized in that**
the air outlet channel (34) is parallel to the air inlet channel (14) or the length direction (L) of the device, where air is configured to flow in the air inlet channel (14) to an opposite direction to the air flowing in the air outlet channel (34).

2. A device (30) according to claim 1, wherein the cooling channels (44) of the heat sink (48) extend in a length direction (L).

3. A device (30) according to claim 1 or 2, wherein the device further comprises a transparent dome (36) housing the light emitting devices (42) inside the dome (36).

4. A device (30) according to claim 3, wherein the dome (36) defines an air space between the inner wall of the dome (36) and the light emitting devices (42) and that the air space is in fluid connection with the cooling channels (44) of the heat sink (48) and the air outlet channel (34).

5. A device (30) according to any one of claims 1 to 4, wherein the light emitting devices (42) are ultra-violet light emitting devices.

6. A device (30) according to any one of claims 1 to 5, wherein the light emitting devices (42) are UV LEDs.

7. A device (30) according to any one of claims 1 to 6, wherein the device (30) comprises light emitting devices (42) facing at least four different directions which are perpendicular to the length direction (L) of the device.

8. A device (30) according to any one of claims 1 to 7, wherein the device (30) comprises light emitting devices (42) facing to a direction parallel to the length direction (L) of the device.

## Patentansprüche

1. Vorrichtung (30) zum Aushärten einer Beschichtungssubstanz im Innern eines Rohrs, wobei die Vorrichtung umfasst
einen flexiblen Schaft (12), der mindestens teilweise im Innern einer Leitung (10) angeordnet ist,
einen Lufteinlasskanal (14) zwischen dem flexiblen Schaft (12) und der Leitung (10),
einen Körper (32), der an der Leitung (10) angebracht ist,
eine Wärmesenke (48) in Verbindung mit dem Körper (32), und die eine Vielzahl von Kühlkanälen (44) definiert, die in Fluidverbindung mit dem Lufteinlasskanal (14) stehen, und
eine Vielzahl von Licht emittierenden Vorrichtungen (42), die dazu konfiguriert sind, von der Wärmesenke (48) gekühlt zu werden,
wobei die Vorrichtung ferner einen Luftauslasskanal (34) in Fluidverbindung mit den Kühlkanälen (44) der Wärmesenke (48) umfasst, und der Luftauslasskanal (34) den Körper (32) auf der gleichen Seite des Körpers (32) verlässt, auf welcher der Lufteinlasskanal (14) in den Körper (32) eintritt, wobei der Luftauslasskanal (34) ein Durchgangsloch in dem Körper (32) ist,
**dadurch gekennzeichnet, dass** der Luftauslasskanal (34) parallel zum Lufteinlasskanal (14) oder der Längsrichtung (L) der Vorrichtung ist, wobei die Luft dazu konfiguriert ist, in dem Lufteinlasskanal (14) in eine entgegengesetzte Richtung zu der Luft, die in dem Luftauslasskanal (34) strömt, zu strömen.

2. Vorrichtung (30) nach Anspruch 1, wobei sich die Kühlkanäle (44) der Wärmesenke (48) in einer Längsrichtung (L) erstrecken.

3. Vorrichtung (30) nach Anspruch 1 oder 2, wobei die Vorrichtung ferner eine transparente Kuppel (36) umfasst, welche die Licht emittierenden Vorrichtungen (42) im Innern der Kuppel (36) aufnimmt.

4. Vorrichtung (30) nach Anspruch 3, wobei die Kuppel (36) einen Luftspalt zwischen der inneren Wand der Kuppel (36) und den Licht emittierenden Vorrichtungen (42) definiert, und der Luftspalt in Fluidverbindung mit den Kühlkanälen (44) der Wärmesenke (48) und dem Luftauslasskanal (34) steht.

5. Vorrichtung (30) nach einem der Ansprüche 1 bis 4, wobei die Licht emittierenden Vorrichtungen (42) ultraviolette Licht emittierende Vorrichtungen sind.

6. Vorrichtung (30) nach einem der Ansprüche 1 bis 5, wobei die Licht emittierenden Vorrichtungen (42) UV-LEDs sind.

7. Vorrichtung (30) nach einem der Ansprüche 1 bis 6, wobei die Vorrichtung (30) Licht emittierende Vorrichtungen (42) umfasst, die in mindestens vier verschiedene Richtungen gerichtet sind, die zur Längsrichtung (L) der Vorrichtung rechtwinklig stehen.

8. Vorrichtung (30) nach einem der Ansprüche 1 bis 7, wobei die Vorrichtung (30) Licht emittierende Vorrichtungen (42) umfasst, die einer Richtung zugewandt sind, die zur Längsrichtung (L) der Vorrichtung parallel ist.

## Revendications

1. Dispositif (30) permettant de durcir une substance de revêtement à l'intérieur d'un tuyau, le dispositif comprenant
une tige flexible (12) disposée au moins partiellement à l'intérieur d'un conduit (10),
un canal d'entrée d'air (14) situé entre la tige flexible (12) et le conduit (10),
un corps (32) fixé au conduit (10),
un dissipateur thermique (48) en liaison avec le corps (32) et définissant une pluralité de canaux de refroidissement (44) qui sont en communication fluidique avec le canal d'entrée d'air (14), et
une pluralité de dispositifs électroluminescents (42) conçus pour être refroidis par le dissipateur thermique (48),
le dispositif comprenant en outre un canal de sortie d'air (34) en communication fluidique avec les canaux de refroidissement (44) du dissipateur thermique (48), et le canal de sortie d'air (34) sort du même côté du corps (32) que celui à partir duquel le canal d'entrée d'air (14) entre dans le corps (32), dans lequel le canal de sortie d'air (34) est un trou traversant dans le corps (32),
**caractérisé en ce que**
le canal de sortie d'air (34) est
parallèle au canal d'entrée d'air (14) ou à la direction de la longueur (L) du dispositif, où l'air est destiné à circuler dans le canal d'entrée d'air (14) dans la direction opposée à l'air circulant dans le canal de sortie d'air (34).

2. Dispositif (30) selon la revendication 1, dans lequel les canaux de refroidissement (44) du dissipateur thermique (48) s'étendent dans la direction de la longueur (L).

3. Dispositif (30) selon la revendication 1 ou 2, le dispositif comprenant en outre un dôme transparent (36) contenant les dispositifs électroluminescents (42) à l'intérieur du dôme (36).

4. Dispositif (30) selon la revendication 3, dans lequel le dôme (36) définit un espace d'air entre la paroi intérieure du dôme (36) et les dispositifs électroluminescents (42), ledit espace d'air étant en communication fluidique avec les canaux de refroidissement (44) du dissipateur thermique (48) et le canal de sortie d'air (34).

5. Dispositif (30) selon l'une quelconque des revendications 1 à 4, dans lequel les dispositifs électroluminescents (42) sont des dispositifs électroluminescents ultraviolets.

6. Dispositif (30) selon l'une quelconque des revendications 1 à 5, dans lequel les dispositifs électroluminescents (42) sont des DEL UV.

7. Dispositif (30) selon l'une quelconque des revendications 1 à 6, le dispositif (30) comprenant des dispositifs électroluminescents (42) orientés dans au moins quatre directions différentes qui sont perpendiculaires à la direction de la longueur (L) du dispositif.

8. Dispositif (30) selon l'une quelconque des revendications 1 à 7, le dispositif (30) comprenant des dispositifs électroluminescents (42) orientés dans une direction parallèle à la direction de la longueur (L) du dispositif.
